# EUROPEAN PATENT SPECIFICATION

(11) **EP 3 609 772 B1**
(45) Date of publication and mention of the grant of the patent: **10.08.2022**
(21) Application number: 18719700.9
(22) Date of filing: 21.03.2018
(51) Int. Cl.: B62D 55/24

(54) **FABRIC REINFORCED RUBBER TRACK CARCASS FOR IMPROVED LOAD/SPEED DURABILITY**
GEWEBEVERSTÄRKTE GUMMIRAUPENKARKASSE FÜR VERBESSERTE LAST-/GESCHWINDIGKEITSBESTÄNDIGKEIT
CARCASSE DE CHENILLE EN CAOUTCHOUC RENFORCÉE DE TISSU POUR UNE DURABILITÉ AMÉLIORÉE DE CHARGE/VITESSE

(30) Priority: 12.04.2017 US 201762484435 P
(43) Date of publication of application: 19.02.2020
(73) Proprietor: Loc Performance Products, LLC, Plymouth, MI 48170 (US)
(72) Inventor: PETERSON, Paul, Cuyahoga Falls, Ohio 44223 (US)
(74) Representative: Grünecker Patent- und Rechtsanwälte PartG mbB
(86) International application number: PCT/US2018/023538
(87) International publication number: WO 2018/190996

(56) References cited:
- EP-A1- 0 589 040
- EP-A1- 1 407 960
- WO-A1-2016/138592
- CA-A1- 2 412 182
- GB-A- 544 711
- GB-A- 2 330 810

## Description

### FIELD

The field to which the disclosure generally relates is vehicle tracks, and more particularly to vehicle tracks having fabric reinforcement layer(s) within track cable layer(s).

### BACKGROUND

This section provides background information to facilitate a better understanding of the various aspects of the disclosure. It should be understood that the statements in this section of this document are to be read in this light, and not as admissions of prior art.

Positive guide-drive, endless rubber tracks, such as those used on agricultural or industrial vehicles, typically include a continuous carcass, tread lugs disposed on the outer circumference of the carcass, and an internal, center row of individual guide-drive lugs which engage guide-drive bars on a guide-drive wheel. The carcass is generally an endless rubber belt or band reinforced with continuous flexible steel cables bonded into the rubber, which functions as a reinforcing structure.

The belt reinforcing structure of a track has at least one primary cable for reinforcing the track in the circumferential direction and usually at least an additional two layers of crossed angled cords which provide lateral stability. Each layer of cords is encapsulated in a layer of rubber. The entire belt structure must be very flexible and therefore is designed to be thin in cross-sectional thickness. This thin structure is sometimes cut by debris trapped internally or cut by simply driving over debris such as concrete rubble, steel or trash found at typical construction sites or in the fields.
Document EP 0 589 040 A1 for example discloses an endless rubber track belt according to the preamble of claim 1.

Furthermore, under sufficient load and/or speed condition(s), separation at the cable reinforcing layer from the carcass, or separation within the cable reinforcing layer can occur. Such separations are often the result of the lateral deflection of the cables under load / speed conditions. For example, some state of the art rubber track carcass constructions for 45,72 cm (18 inch) wide tracks cannot carry a load of 10205,83 Kg at 40,23Km/h (22500 lb at 25 mph) for 3 hours, without resulting in carcass failure.

Once the belt is cut, the reinforcing cords are exposed to moisture which can quickly oxidize the steel cords. Also, when the cable reinforcing layer fails from separation, the reinforcement cords of the belt progressively separate from the track. In either case, the track is ultimately rendered track useless.

Thus, there is an ongoing need for endless tracks for industrial or agricultural vehicles with improved reinforcing layers along increases in load and/or speed capability, such need met, at least in part, with embodiments according to the following disclosure.

### SUMMARY

This section provides a general summary of the disclosure, and is not a necessarily a comprehensive disclosure of its full scope or all of its features.

According to the invention, an endless vehicle track is provided which includes an endless, elongate carcass having an outer surface, an inner surface, and at least one reinforcing layer. A plurality of tread lugs disposed on the outer surface, and a plurality of drive lugs disposed on the inner surface. Each of the drive lugs includes oppositely disposed drive faces, an upper face between the drive faces, and oppositely disposed end faces. The at least one reinforcing layer includes longitudinal cables and a cord fabric material disposed adjacent the longitudinal cables. In some cases, the cord fabric material is disposed around the longitudinal cables. The cord fabric material may be disposed completely on one side the longitudinal cables and further extend around the longitudinal cables into the wheel path region of the endless rubber track belt. According to the invention, the cord fabric material envelops the longitudinal cables and may be butt spliced at the center line of the track. The cord fabric material may also have cords orientated transversely to the longitudinal cables.

In another not claimed aspect of the disclosure, a rubber based article includes an elongate carcass including an outer surface, an inner surface, and at least one reinforcing layer, wherein the at least one reinforcing layer comprises longitudinal cables and a cord fabric material disposed adjacent the longitudinal cables. The cord fabric material may be disposed around the longitudinal cables, or is partially disposed around the longitudinal cables. In some cases, the cord fabric material envelops the longitudinal cables.

Yet another not claimed aspect are methods of making an endless rubber track belt, which include providing a plurality of longitudinal cables, and applying a cord fabric material onto one side of the plurality of longitudinal cables, where the cord fabric material extends beyond opposing sides of the plurality of longitudinal cables. The cord fabric material extending beyond opposing sides of the plurality of longitudinal cables is then wrapped to at least partially cover an opposing side of the plurality of longitudinal cables. An adhesion gum is then applied to the cord fabric material and the plurality of longitudinal cables. The plurality of longitudinal cables, the cord fabric material and the adhesion gum are entrained in a rubber material to provide a green belt, which may then be placed in a mold. A plurality of tread lugs and a plurality of drive lugs are formed in the green belt, and the belt then cured.

### BRIEF DESCRIPTION OF THE DRAWINGS

Certain embodiments of the disclosure will hereafter be described with reference to the accompanying drawings, wherein like reference numerals denote like elements. It should be understood, however, that the accompanying figures illustrate the various implementations described herein and are not meant to limit the scope of various technologies described herein, and:
FIG. 1 illustrates a track assembly which may be used on an industrial or agricultural vehicle, according to an embodiment of the disclosure;
FIG. 2 depicts, in a perspective view, a portion of a track where guide-drive lugs both retain the track on the vehicle and are engaged and driven by a guide-drive wheel in accordance with an embodiment of the disclosure;
FIG. 3 shows, in a perspective view, a cross-section of a track 300, according to some aspects of the disclosure; and,
FIG. 4 shows, in a perspective view, a cross-section of a track 400, according to some aspects of the disclosure; and

### DETAILED DESCRIPTION

The following description of the variations is merely illustrative in nature and is in no way intended to limit the scope of the disclosure, its application, or uses. The description is presented herein solely for the purpose of illustrating the various embodiments of the disclosure and should not be construed as a limitation to the scope and applicability of the disclosure. In the summary of the disclosure and this detailed description, each numerical value should be read once as modified by the term "about" (unless already expressly so modified), and then read again as not so modified unless otherwise indicated in context. Also, in the summary of the disclosure and this detailed description, it should be understood that a value range listed or described as being useful, suitable, or the like, is intended that any and every value within the range, including the end points, is to be considered as having been stated. For example, "a range of from 1 to 10" is to be read as indicating each and every possible number along the continuum between about 1 and about 10. Thus, even if specific data points within the range, or even no data points within the range, are explicitly identified or refer to only a few specific, it is to be understood that inventors appreciate and understand that any and all data points within the range are to be considered to have been specified, and that inventors had possession of the entire range and all points within the range.

Unless expressly stated to the contrary, "or" refers to an inclusive or and not to an exclusive or. For example, a condition A or B is satisfied by anyone of the following: A is true (or present) and B is false (or not present), A is false (or not present) and B is true (or present), and both A and B are true (or present).

In addition, use of the "a" or "an" are employed to describe elements and components of the embodiments herein. This is done merely for convenience and to give a general sense of concepts according to the disclosure. This description should be read to include one or at least one and the singular also includes the plural unless otherwise stated.

The terminology and phraseology used herein is for descriptive purposes and should not be construed as limiting in scope. Language such as "including," "comprising," "having," "containing," or "involving," and variations thereof, is intended to be broad and encompass the subject matter listed thereafter, equivalents, and additional subject matter not recited.

Also, as used herein any references to "one embodiment" or "an embodiment" means that a particular element, feature, structure, or characteristic described in connection with the embodiment is included in at least one embodiment. The appearances of the phrase "in one embodiment" in various places in the specification are not necessarily referring to the same embodiment.

State of the art rubber track carcass constructions for 45,72 cm (18 inch) wide tracks typically cannot carry a load of 10205,83 Kg at 40,23Km/h (22500 lb at 25 mph) for 3 hours, without separation occurring, while it is desirable to have tracks which can carry a load of 12473,79 Kg at 40,23Km/h (27500 lb at 25 mph) for 3 hours, without separation. Current conventional rubber track constructions and materials are not able to achieve 12473,79 Kg at 40,23Km/h (27500 lb at 25 mph) for 3 hours. However, some embodiments according to the disclosure can achieve 12473,79 Kg at 40,23Km/h (27500 lb at 25 mph) for 3 hours, without requiring significant improvements in compounding technology and techniques.

In accordance with some aspects of the disclosure, one or more fabric reinforcing layers are incorporated into a vehicle track, adjacent longitudinal cables to restrain the lateral deflection of the cables under load. In some cases, cords or woven fabric is wrapped around the layer of such primary longitudinal cables. A benefit of such is limitation of lateral deflection of the cables under load, which in turn reduces strain in the rubber matrix between the cables, as well as improvement in the capability of the track to carry high loads without experiencing heat and strain related separations.

In some embodiments the rubber track carcass is built in the conventional manner. However, before the longitudinal cable adhesion gum is applied, a cord fabric (or other suitable fabric) with cords running transversely to the longitudinal cables, is disposed adjacent the longitudinal cables. In some cases, this cord fabric may be wider than the cable lay by at least eight inches. The cable adhesion gum and cables would be applied and stitched as typically done. Then the extending cord fabric wings would be turned up and over the cables. In such cases, these wings must be long enough to extend all the way across the wheel path area, and butt spliced at the center line of the track. Then the track build may be finished in the conventional manner. In some alternative embodiments, the reinforcing fabric is a woven fabric having the flexibility to allow the turn-up operation, described above.

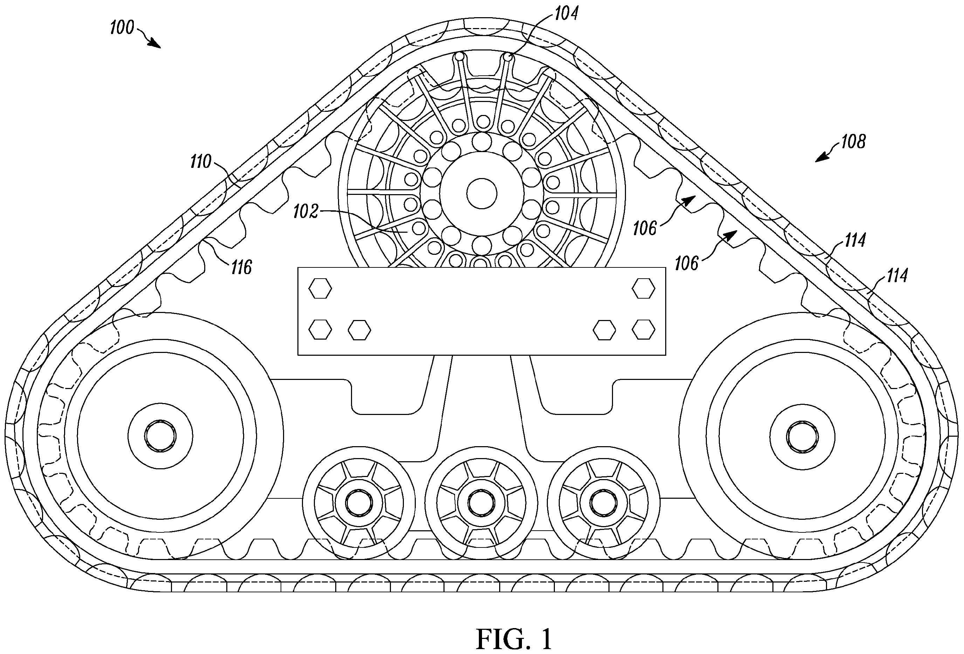

Now referencing FIG. 1, which illustrates a track assembly 100 usable on an industrial or agricultural vehicle (not shown). The track assembly 100 includes a guide-drive wheel 102 comprising a plurality of teeth or guide-drive bars 104 that are positioned for mating engagement with guide-drive lugs 106. The guide-drive lugs 106 are mounted on a rubber track 108 having an endless elongate carcass defining a longitudinal direction around the circumference thereof. The endless track carcass has an outer surface 110 including a plurality of ground engaging tread lugs 114 and an inner surface 116 with a plurality of guide-drive lugs 106, typically located on or near the center portion of the carcass.

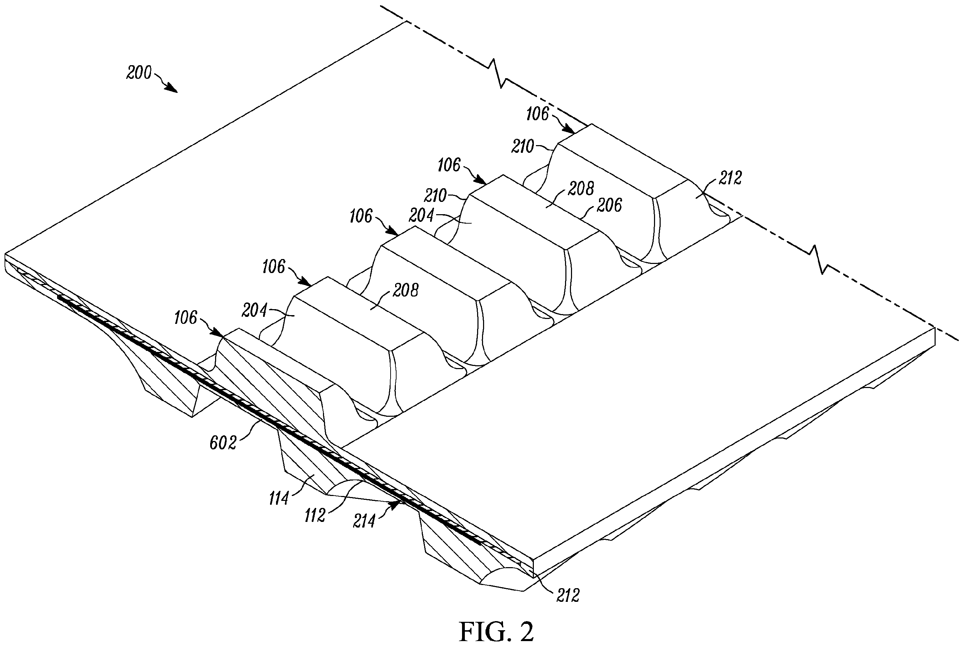

FIG. 2 illustrates one embodiment according to the disclosure, in a segmented perspective view. In some aspects, endless track 200 has guide-drive lugs 106 which both retain the track 200 on the vehicle, and are engaged by the guide-drive wheel to transfer power to the track. In another embodiment of the disclosure, the guide-drive lugs 106 are only provided for the purpose of retaining the track 200 on the vehicle. In this scenario, the guide-drive lug 106 only acts in the capacity of guide-lugs. In cases where the lugs 106 act to both guide and guide-drive the track, each guide-drive lug 106 comprises an elongated shaped bar with inclined guide-drive faces 204, 206, and an upper flat face 208. The inclined faces are typically known as the guide-drive face 204 and the reverse face 206 of the guide-drive lugs 106. End or guiding faces 210, 212 may be flat or in the alternative they can have various other suitable shapes, such as tapered, convex, concave, and the like.

Track 200 depicted in FIG. 2 further includes belt carcass 212, which includes one or more layers of gum rubber or elastomeric material. Embedded within the gum rubber or elastomeric material are one or more reinforcement layers 214 which extend transversely along the track width. The reinforcement layers 214 may include such components as longitudinal cable reinforcement layers, fabric reinforcement layers, transverse cable reinforcement layers (disposed at right angles to the longitudinal direction) or any other reinforcement layer known to those skilled in the art. In accordance with the disclosure, the longitudinal cable reinforcement layers are contained within a cord fabric, or other suitable fabric.

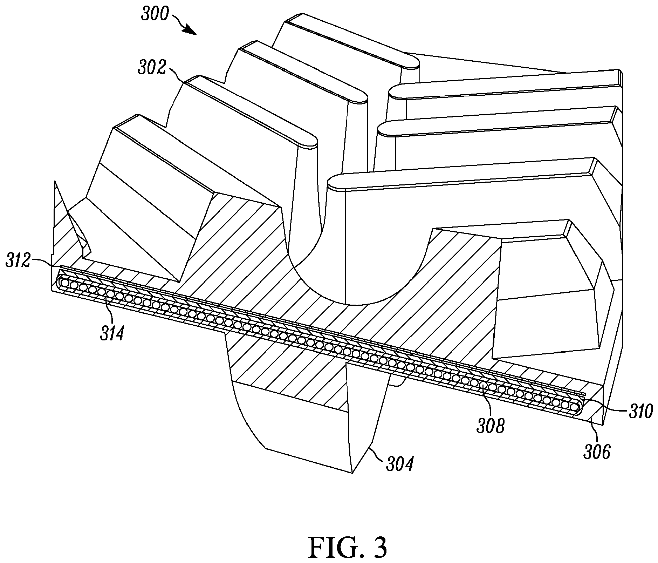

Now referring to FIG. 3, which shows, in a perspective view, a cross-section of a track 300, according to some aspects of the disclosure. Track 300 generally includes ground engaging tread lugs 302 and guide-drive lugs 304 disposed on opposing sides of endless elongate carcass 306. The material forming ground engaging tread lugs 302, guide-drive lugs 304 and carcass 306 may be any suitable material readily know to those of skill in the art, for example, but not limited to, natural rubber or synthetic rubber, such as emulsion styrene-butadiene rubber, solution styrene-butadiene rubber, synthetic polyisoprene rubber, polybutadiene rubber, or a blend of natural and synthetic rubbers, and the like.

Embedded within endless elongate carcass 306 are one or more reinforcement layers 308, 310 which extend transversely along the track width. The reinforcement layers 308, 310 may include such components as longitudinal cable reinforcement layers 308, and secondary reinforcement layers 310, transverse cable reinforcement layers 312 (disposed at right angles to the longitudinal direction) or any other reinforcement layers, or combinations thereof, known to those skilled in the art. A cord fabric 314 having cords running transversely to the cables 308 is applied around cables 308.

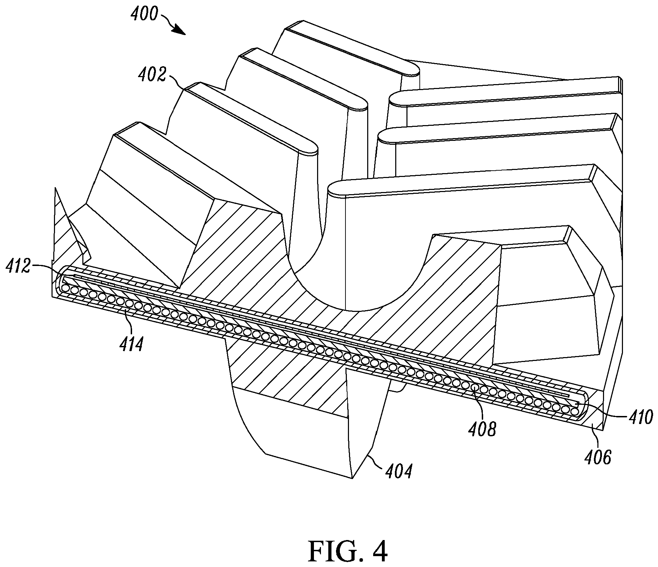

FIG. 4, shows, in a perspective view, a cross-section of a track 400, according to some other aspects of the disclosure. Track 400 generally includes ground engaging tread lugs 402 and guide-drive lugs 404 disposed on opposing sides of endless elongate carcass 406. The material forming ground engaging tread lugs 402, guide-drive lugs 404 and carcass 406 may be any suitable material readily know to those of skill in the art, for example, but not limited to, natural rubber or synthetic rubber, such as emulsion styrene-butadiene rubber, solution styrene-butadiene rubber, synthetic polyisoprene rubber, polybutadiene rubber, or a blend of natural and synthetic rubbers, and the like.

Embedded within endless elongate carcass 406 are one or more reinforcement layers 408, 410 which extend transversely along the track width. The reinforcement layers 408, 410 may include such components as longitudinal cable reinforcement layers 408, and secondary reinforcement layers 410, transverse cable reinforcement layers 412 (disposed at right angles to the longitudinal direction) or any other reinforcement layers, or combinations thereof, known to those skilled in the art. A cord fabric 414 having cords running transversely to the cables 408 is applied around cables 408, secondary reinforcement layers 410, and transverse cable reinforcement layers 412.

While the above embodiments are described in the context of endless vehicle tracks, it is within the scope of the disclosure to apply the inventive concept to other rubber based articles having longitudinal cables, such as, but not limited to, steel cable reinforced conveyor belts, power transmission belts, and the like.

The foregoing description of the embodiments has been provided for purposes of illustration and description. Example embodiments are provided so that this disclosure will be sufficiently thorough, and will convey the scope to those who are skilled in the art. Numerous specific details are set forth such as examples of specific components, devices, and methods, to provide a thorough understanding of embodiments of the disclosure, but are not intended to be exhaustive or to limit the disclosure.

Also, in some example embodiments, well-known processes, well-known device structures, and well-known technologies are not described in detail. Further, it will be readily apparent to those of skill in the art that in the design, manufacture, and operation of apparatus to achieve that described in the disclosure, variations in apparatus design, construction, condition, erosion of components, gaps between components may present, for example.

Although the terms first, second, third, etc. may be used herein to describe various elements, components, regions, layers and/or sections, these elements, components, regions, layers and/or sections should not be limited by these terms. These terms may be only used to distinguish one element, component, region, layer or section from another region, layer or section. Terms such as "first," "second," and other numerical terms when used herein do not imply a sequence or order unless clearly indicated by the context. Thus, a first element, component, region, layer or section discussed below could be termed a second element, component, region, layer or section without departing from the teachings of the example embodiments.

Spatially relative terms, such as "inner", "adjacent", "outer," "beneath," "below," "lower," "above," "upper," and the like, may be used herein for ease of description to describe one element or feature's relationship to another element(s) or feature(s) as illustrated in the figures. Spatially relative terms may be intended to encompass different orientations of the device in use or operation in addition to the orientation depicted in the figures. For example, if the device in the figures is turned over, elements described as "below" or "beneath" other elements or features would then be oriented "above" the other elements or features. Thus, the example term "below" can encompass both an orientation of above and below. The device may be otherwise oriented (rotated 90 degrees or at other orientations) and the spatially relative descriptors used herein interpreted accordingly.

Although a few embodiments of the disclosure have been described in detail above, those of ordinary skill in the art will readily appreciate that many modifications are possible within the scope of the appended claims.

## Claims

1. An endless rubber track belt (300), comprising:
an endless, elongate carcass (306) including an outer surface, an inner surface, and at least one reinforcing layer;
a plurality of tread lugs (302) disposed on said outer surface; and,
a plurality of drive lugs (304) disposed on said inner surface, each said drive lug including oppositely disposed drive faces, an upper face between said drive faces, and oppositely disposed end faces;
wherein the at least one reinforcing layer comprises longitudinal cables (308) and a cord fabric material (314) disposed adjacent the longitudinal cables (308), **characterised in that** the cord fabric material (314) envelops the longitudinal cables (308) and is butt spliced at the center line of the track.

2. The endless rubber track belt (300) of claim 1, wherein the cord fabric material (314) is disposed around the longitudinal cables (308).

3. The endless rubber track belt (300) of claim 2, wherein the cord fabric material (314) is disposed completely on one side the longitudinal cables (308) and further extends around the longitudinal cables (308) into the wheel path region of the endless rubber track belt (300).

4. The endless rubber track belt (300) according to any of the previous claims, wherein the cord fabric material (314) comprises cords orientated transversely to the longitudinal cables (308).

5. The endless rubber track belt (300) according to any of the previous claims, wherein the at least one reinforcing layer further comprises at least one transverse cable reinforcement layer (312).

6. The endless rubber track belt (300) according to any of the previous claims, wherein at least one of the plurality of tread lugs (302), the plurality of drive lugs (304) and the carcass (306) at least partially comprise a synthetic rubber.

## Patentansprüche

1. Endloses Gummi-Raupenband (300), das umfasst:
einen endlosen länglichen Unterbau (306), der eine Außenfläche, eine Innenfläche sowie eine Verstärkungsschicht enthält;
eine Vielzahl von Laufflächen-Stollen (302), die an der Außenfläche angeordnet sind; und,
eine Vielzahl von Antriebs-Stollen (304), die an der Innenfläche angeordnet sind, wobei jeder der Antriebs-Stollen entgegengesetzt angeordnete Antriebsflächen, eine obere Fläche zwischen den Antriebsflächen und entgegengesetzt angeordnete Endflächen enthält;
und die wenigstens eine Verstärkungsschicht Längsdrähte (308) und ein Cordgewebe-Material (314) umfasst, das an die Längsdrähte (308) angrenzend angeordnet ist, **dadurch gekennzeichnet, dass** das Cordgewebe-Material (314) die Längsdrähte (308) umhüllt und an der Mittellinie des Raupenbandes auf Stoß gespleißt ist.

2. Endloses Gummi-Raupenband (300) nach Anspruch 1, wobei das Cordgewebe-Material (314) um die Längsdrähte (308) herum angeordnet ist.

3. Endloses Gummi-Raupenband (300) nach Anspruch 2, wobei das Cordgewebe-Material (314) vollständig an einer Seite der Längsdrähte (308) angeordnet ist und sich weiter um die Längsdrähte (308) herum in den Radweg-Bereich des endlosen Gummi-Raupenbandes (300) hinein erstreckt.

4. Endloses Gummi-Raupenband (300) nach einem der vorangehenden Ansprüche, wobei das Cordgewebe-Material (314) quer zu den Längsdrähten (308) ausgerichtete Corde umfasst.

5. Endloses Gummi-Raupenband (300) nach einem der vorangehenden Ansprüche, wobei die wenigstens eine Verstärkungsschicht des Weiteren wenigstens eine quer verlaufende Draht-Verstärkungsschicht (312) umfasst.

6. Endloses Gummi-Raupenband (300) nach einem der vorangehenden Ansprüche, wobei die Vielzahl von Laufflächen-Stollen (302), die Vielzahl von Antriebs-Stollen (304) oder/und der Unterbau (306) wenigstens teilweise einen synthetischen Gummi umfasst/umfassen.

## Revendications

1. Chenille en caoutchouc sans fin (300), comprenant :
une carcasse allongée sans fin (306) incluant une surface extérieure, une surface intérieure et au moins une couche de renforcement ;
une pluralité de crampons (302) disposés sur ladite surface extérieure ; et,
une pluralité de pattes d'entraînement (304) disposées sur ladite surface intérieure, chaque dite patte d'entraînement incluant des faces d'entraînement disposées opposées, une face supérieure entre lesdites faces d'entraînement et des faces d'extrémité disposées opposées ;
dans laquelle
l'au moins une couche de renforcement comprend des câbles longitudinaux (308) et un tissu de corde (314) disposé adjacent aux câbles longitudinaux (308), **caractérisé en ce que** le tissu de corde (314) enveloppe les câbles longitudinaux (308) et est épissé en about sur la ligne centrale de la chenille.

2. La chenille en caoutchouc sans fin (300) de la revendication 1, dans laquelle le tissu de corde (314) est disposé autour des câbles longitudinaux (308).

3. La chenille en caoutchouc sans fin (300) de la revendication 2, dans laquelle le tissu de corde (314) est disposé complètement sur un côté des câbles longitudinaux (308) et s'étend en outre autour des câbles longitudinaux (308) dans la zone de trajet de roue de la chenille en caoutchouc sans fin (300).

4. La chenille en caoutchouc sans fin (300) selon l'une quelconque de la des revendications précédentes, dans laquelle le tissu de corde (314) comprend des cordes orientées transversalement aux câbles longitudinaux (308) .

5. La chenille en caoutchouc sans fin (300) selon l'une quelconque des précédentes revendications, dans laquelle l'au moins une couche de renforcement comprend en outre au moins une couche de renforcement de câble transversale (312) .

6. La chenille en caoutchouc sans fin (300) selon l'une quelconque des précédentes revendications, dans laquelle au moins un de la pluralité de crampons (302), la pluralité de pattes d'entraînement (304) et la carcasse (306) au moins partiellement comprennent un caoutchouc synthétique.
